# EUROPEAN PATENT SPECIFICATION

(11) **EP 3 490 753 B1**
(45) Date of publication and mention of the grant of the patent: **20.05.2020**
(21) Application number: 17755237.9
(22) Date of filing: 12.07.2017
(51) Int. Cl.: B24B 9/10, C03B 33/023, C03B 33/03

(54) **EQUIPMENT FOR PROCESSING GLASS SHEETS**
VORRICHTUNG ZUM BEARBEITEN VON GLASSCHEIBEN
ÉQUIPEMENT PERMETTANT LE TRAITEMENT DE FEUILLES DE VERRE

(30) Priority: 29.07.2016 IT 201600079945
(43) Date of publication of application: 05.06.2019
(73) Proprietor: 2M S.R.L., 36016 Thiene (VI) (IT)
(72) Inventor: DALLA FINA, Massimo, 36030 Sarcedo (VI) (IT)
(74) Representative: Ziliotto, Tiziano
(86) International application number: PCT/IB2017/054194
(87) International publication number: WO 2018/020349

(56) References cited:
- EP-A1- 2 275 388
- CN-U- 205 325 369
- JP-A- H02 185 363
- US-A- 5 040 342
- US-A1- 2003 147 035
- US-B1- 6 220 056

## Description

### TECHNICAL FIELD OF THE INVENTION

The present invention concerns the technical field related to the processing of sheets, especially glass sheets.

In particular, the present invention concerns the operation of removal of sharp edges or corners from sheets subjected to a cutting process.

### DESCRIPTION OF THE STATE OF THE ART

It is known that in the field of glass sheets processing, in particular glass sheets of the monolithic-layered type, several steps are carried out which, starting from an initial glass sheet in a predetermined size, result in the manufacture of final products intended for various uses.

For example, starting from a large-sized glass sheet, a first cutting step can be carried out in order to obtain a size which is convenient for the final product to be obtained, followed by successive treatment and finishing steps performed on the previously cut piece.

The final product is to be understood as a product suited to be used successively, both in the form in which it has been manufactured and in forms obtained with subsequent adaptations (in this case it is actually an intermediate product). For example, the final product may be constituted by a window pane, which will be successively used to make the window itself.

According to a known technique, the cutting operations are carried out automatically by placing the initial glass sheet on a horizontal workbench, above which an operating cutting head is automatically moved which, by means of suitable tools, cuts the upper surface of the sheet along convenient directions according to predefined outlines. The tool typically comprises a diamond point or a small wheel.

The sheet, shaped as described above, is divided/separated according to the provided outlines. The separating operation is carried out manually by an operator who handles the sheet, shaking it and collecting the various shaped pieces or through automated separating means suited to automatically separate the shaped pieces.

The shaped pieces obtained in this way are then conveniently subjected to a step of removal of the sharp edges which otherwise may represent a dangerous element when the pieces are successively handled by the operators. In some cases said removal step is compulsory in accordance with well-known safety rules to be applied to obtain safety glass.

This type of processing, also known as edging, is commonly carried out by means of edging machines that, in fact, serve to remove the sharp edges from the shaped pieces.

According to the known technique, edging machines comprise a workbench on which the shaped piece can be positioned and a tool that is moved along the edges to be removed. The tool is typically constituted by diamond belts or rotary diamond wheels suited to remove the sharp edges, for example by removing an edge portion according to a 45° angle with respect to the glass sheet plane.

The systems for processing sheets belonging to the state of the art, however, pose some recognized drawbacks.

A first drawback of said systems is represented by the fact that for the operator it is dangerous to handle the shaped pieces that have just been cut and to place them on the workbench of the edging machine, precisely due to the presence of the sharp edges resulting from the cutting operation.

Another drawback posed by the systems of the known type is related to the fact that the operations for moving the shaped pieces from the workbench of the cutting area onto the workbench of the edging machine are rather delicate to carry out.

A further drawback posed by the systems of the known type is related to the time and costs required by said cutting and edging operations and to the need to resort to very skilled operators who know how to handle glass sheets and cut pieces.

A further drawback posed by the systems of the known type is related to the actual overall dimensions of the cutting and edging machines.

It is the object of the present invention to overcome the drawbacks described above.

In particular, it is one object of the present invention to provide a solution that makes it possible to reduce to a minimum the risks for the operators during-the sheet cutting and edging processes.

It is another object of the present invention to provide a solution that makes it possible to optimize the efficiency of the cutting and edging processes as a whole.

It is a further object of the present invention to provide a solution that makes it possible to reduce the overall space occupied during the execution of the cutting and edging processes.

Equipments for processing a glass sheet according to the state of the art are known, for instance, from documents US 6 220 056 B1 and US 5 040 342 A**.**

### SUMMARY OF THE PRESENT INVENTION

The present invention is based on the general consideration that it would be convenient to provide a piece of equipment comprising an edging device and a workbench suited to accommodate a piece to be edged, wherein the workbench defines also the workbench for the preceding cutting step intended to obtain said piece to be edged.

According to a first aspect of the present invention, therefore, the subject of the same is a piece of equipment for processing a glass sheet according to claim 1.

Preferably, the edging device can be positioned under the workbench. According to a preferred embodiment of the invention, the equipment comprises moving means suited to move the edging device.

Preferably, the moving means comprise moving means suited to position the edging device towards the first portion or towards the second portion of the workbench.

In a preferred embodiment, the equipment comprises moving means suited to move the first portion and/or the second portion of the workbench.

According to a preferred embodiment of the invention, the equipment comprises cutting means associated with the workbench.

Preferably, the cutting means are arranged over the workbench.

According to another preferred embodiment of the invention, the cutting means may be preferably positioned under the workbench.

In a preferred embodiment of the invention, the equipment comprises suction means for drawing the material resulting from the edging operation.

In another preferred embodiment, the equipment comprises drying/blowing means suited to carry out drying operations during the edging step, preferably in case of use of lubricating means.

According to a preferred embodiment of the invention, the equipment comprises lubricating and/or cooling means for said edging operation.

### BRIEF DESCRIPTION OF THE FIGURES

Further advantages, objects and characteristics, as well as further embodiments of the present invention are defined in the claims and highlighted here below through the following description, in which reference is made to the attached drawings. In particular, in the figures:
- Figure 1A shows a top view of a preferred embodiment of the equipment that is the subject of the invention;
- Figure 1B shows a side view of the equipment shown in Figure 1;
- Figure 1C shows an enlarged detail of Figure 1B;
- Figure 2A shows the equipment of Figure 1A with a sheet to be processed in a first operating position, before the cutting step;
- Figure 2B shows a side view of the equipment shown in Figure 2A;
- Figure 2C shows an enlarged detail of Figure 2B;
- Figures from 3A to 7A show the equipment shown in Figure 1A with a sheet in successive operating positions following the cutting step;
- Figures from 3B a 7B show a side view of the corresponding Figures from 3A to 7A;
- Figures from 3C a 7C show an enlarged detail of the corresponding Figures from 3B to 7B;

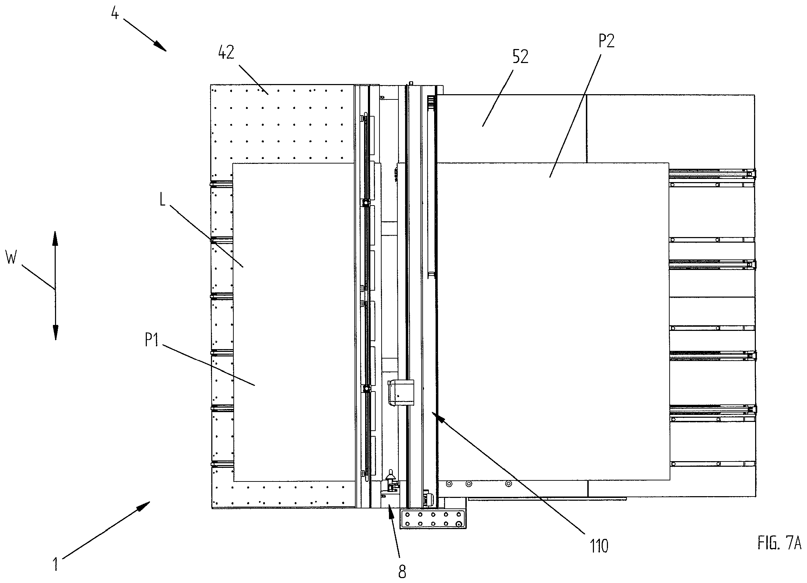

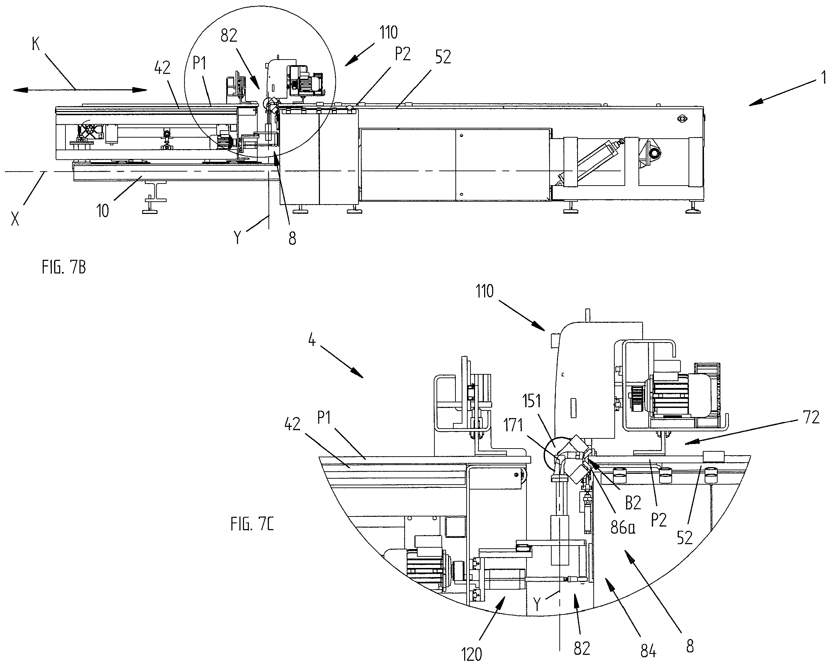

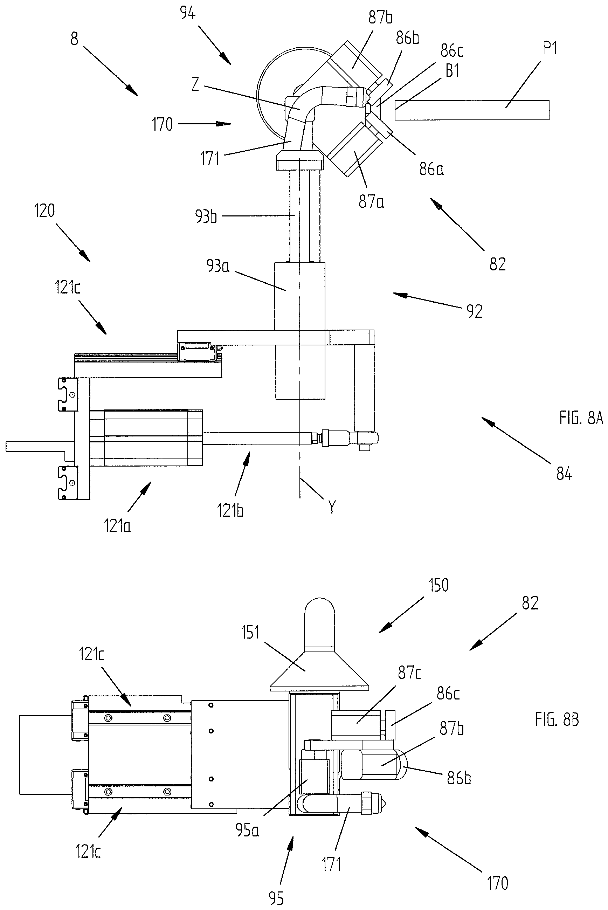

- Figure 8A shows an enlarged detail of Figure 7C;
- Figure 8B shows a top view of Figure 8A.

### DETAILED DESCRIPTION OF THE PRESENT INVENTION

Even though the present invention is described here below with reference to its embodiment illustrated in the drawings, the present invention is not limited to the embodiment described below and illustrated in the drawings. On the contrary, the embodiment described and illustrated herein clarifies some aspects of the present invention, the scope of which is defined in the claims.

The present invention has proved to be particularly advantageous with reference to the construction of a piece of equipment for processing glass sheets, in particular a sheet made of monolithic-layered glass.

A preferred example of embodiment of the equipment 1 that is the subject of the present invention is illustrated in the attached drawings.

The equipment 1 substantially comprises a workbench 4, cutting means 6 and an edging device 8.

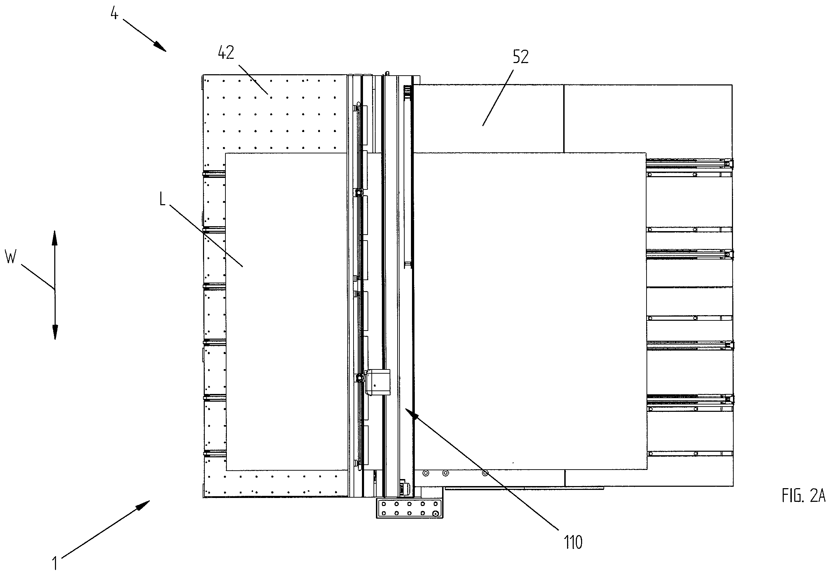

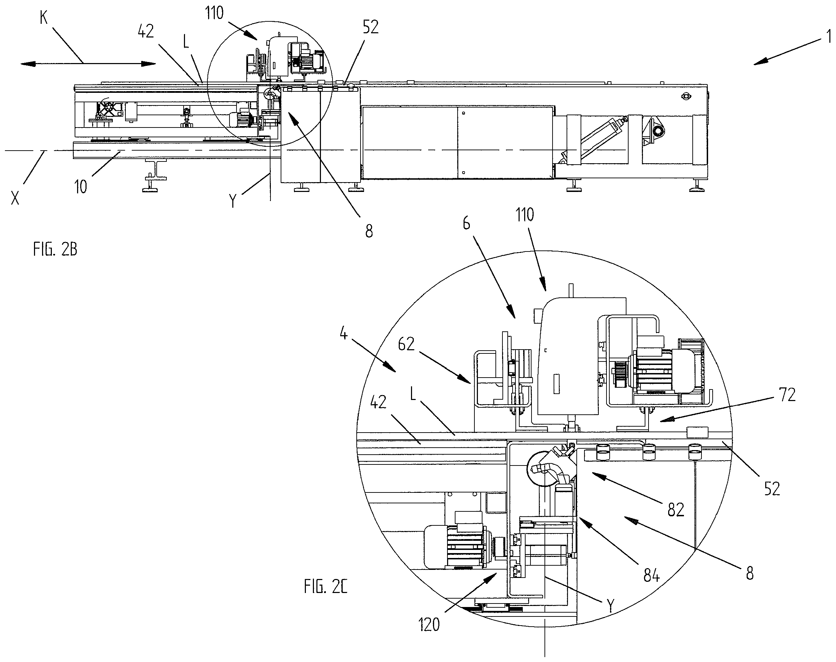

The workbench 4 is suited to accommodate a sheet L, as shown in Figure 2A, on which convenient processing cycles which are described in greater detail below can be carried out.

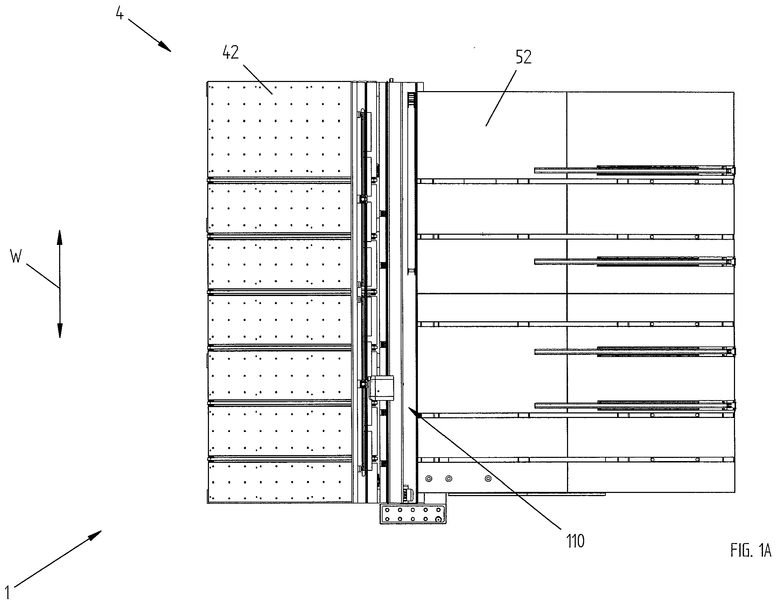

In the embodiment illustrated in Figure 1a, the equipment 1 is in an operating condition preferably corresponding to the initial condition, that is, before use. In this condition, the cutting means 6 are positioned over the workbench 4 and the edging device 8 is positioned under the workbench 4.

As is better illustrated below, the mutual positions of the workbench 4, the cutting means 6 and the edging device 8 vary in the different operating steps of the equipment 1.

The workbench 4, the cutting means 6 and the edging device 8 are preferably mounted on a supporting structure 10 which can be positioned on the ground. The supporting structure 10 preferably comprises adjusting means 12 for the correct positioning of the equipment 1. The adjusting means 12 preferably comprise adjustable feet.

The workbench 4 preferably comprises two portions 42, 52. The two portions 42, 52 are movable with respect to each other. In the embodiment illustrated and described herein, the first portion 42, on the left in the various figures, is movable, while the second portion 52, on the right in the various figures, is fixed.

In variant embodiments, the situation may be reversed, with the first portion which is fixed and the second portion which is movable, or both portions may be movable.

In particular, the first portion 42 can be moved and arranged in different positions along a longitudinal direction X.

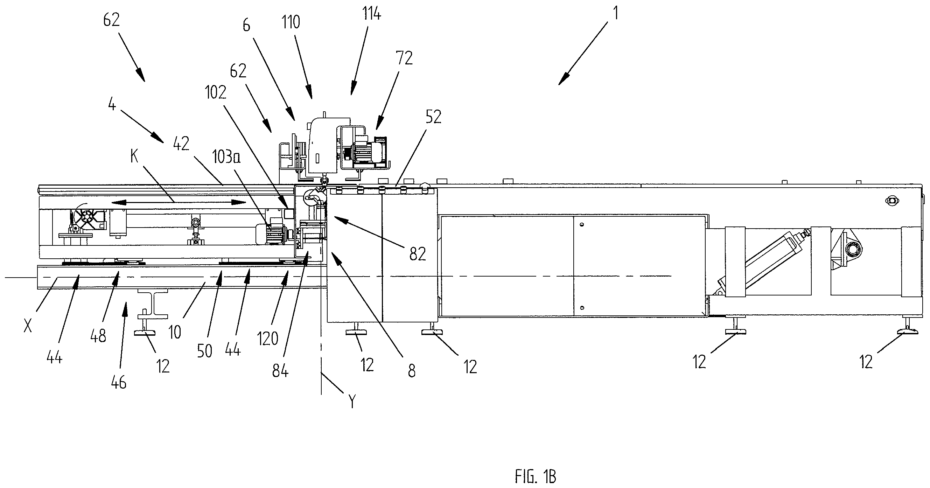

Sliding means 44 are provided, thanks to which the first portion 42 slides with respect to the supporting structure 10 and which preferably comprise slide rails. Furthermore, moving means 46 are provided which are suited to move the first portion 42 and preferably comprise a motor 48 (partially visible in Figure 1B).

In variant embodiments, the moving means may comprise alternative means instead of the motor 48 illustrated herein, said alternative means being suited to obtain the desired movement in any case. Only by way of example, there may be electric motors and/or pneumatic motors and/or combinations of these and/or suitable kinematic mechanisms, such as racks, chains, belts, etc.

The equipment 1 preferably comprises a mechanical element serving as a safety stop 50 (partially visible in Figure 1B) for the first portion of the workbench 4 along the longitudinal direction X.

The first portion 42 and the second portion 52 of the workbench 4 are associated, preferably at the top, with respective thrusting elements 62, 72 suited to act towards the workbench 4 in order to keep the sheet L stationary.

The first portion 42 is movable with respect to the second portion 52, in such a way that it can be positioned at a distance which is sufficient to allow an operating head 82 of the edging device 8 to be accommodated, as shown in Figures from 4A.

In variant embodiments, the first portion may comprise rotation means suited to allow the rotation of the same portion with respect to a vertical axis and the rotation of the piece positioned on it. Alternatively, the first portion can be associated with means for rotating the piece positioned on it such as, for example, a system for coupling and rotating the piece through suction cups. Analogously, in variant embodiments the second portion may comprise rotation means suited to allow the rotation of the same portion with respect to a vertical axis and the rotation of the piece positioned on it.

Alternatively, the second portion can be associated with means for rotating the piece positioned on it such as, for example, a system for coupling and rotating the piece through suction cups.

The edging device 8, as explained above, is preferably positioned under the workbench 4 and more preferably under the first portion 42 of the workbench 4. The edging device 8 comprises said operating head 82 and moving means 84 suited to move the operating head 82.

In the embodiment illustrated and better visible in Figures 8A and 8B, the operating head 82 preferably comprises three rotary diamond wheels 86a, 86b and 86c, which are suited to be positioned and moved with respect to an edge B 1 of a piece P1 to be edged. Corresponding motors 87a, 87b and 87c allow the rotation of said diamond wheels 86a, 86b and 86c.

In the embodiment illustrated herein, the operating head 82 is equipped with diamond wheels. In variant embodiments different tools can be used such as, for example, one or more flap discs.

In the case where diamond wheels are used, the corresponding processing cycle is preferably carried out in wet conditions, meaning with the aid of suitable lubricating/cooling means such as, for example, emulsifiable oils, water, etc.. In this case, drying/blowing means are preferably provided, which are suited to dry the previously processed parts.

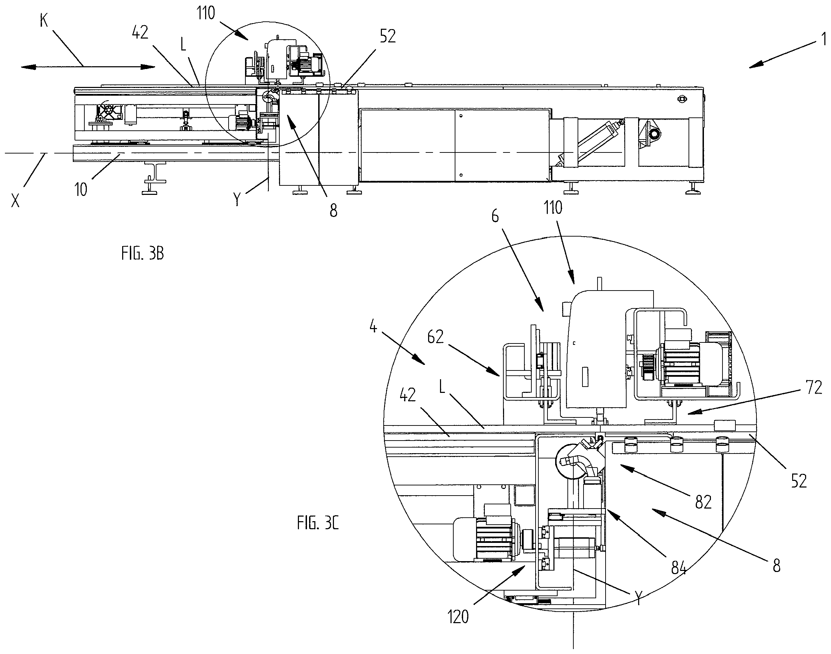

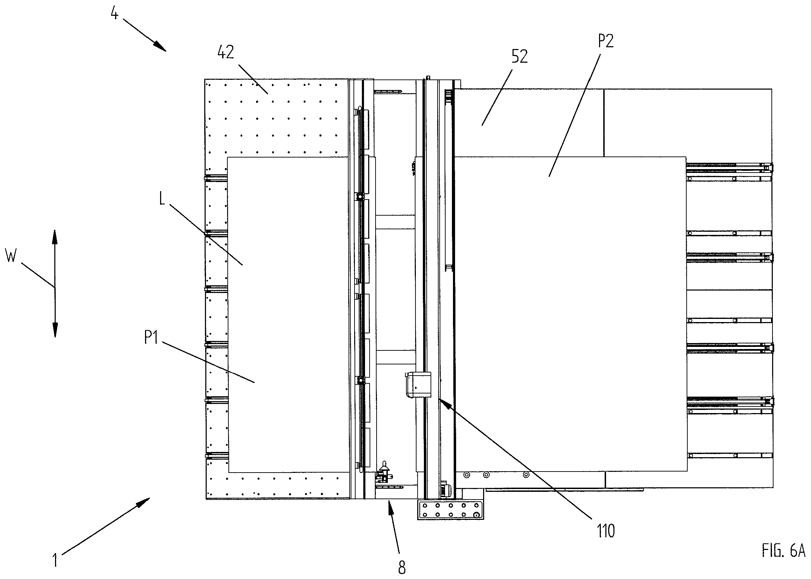

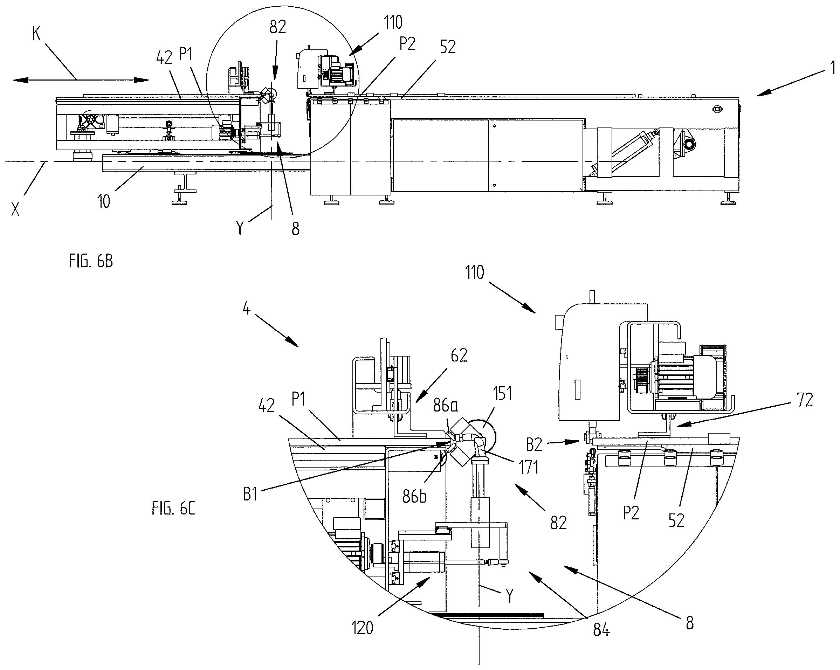

In the case where flap discs are used, the corresponding processing cycle is preferably carried out in dry conditions, wherein means are preferably provided which are suited to draw the glass powder generated during the processing cycle. The moving means 84 preferably comprise first vertical moving means 92 suited to allow the movement of the operating head 82 along a vertical direction Y from a lower position under the workbench 4, as shown for example in Figure 3B, to an upper operating position for the operating head 82, as shown for example in Figures 6B and 7B.

The first vertical moving means 92 preferably comprise a pneumatic cylinder 93a and a telescopic rod 93b at the end of which the operating head 82 is mounted.

In variant embodiments, the first vertical moving means may comprise alternative means instead of the system illustrated herein, said alternative means being in any case suited to obtain the desired movement. Only by way of example, there may be electric motors and/or suitable kinematic mechanisms, such as racks, chains, belts, etc.

The moving means 84 preferably comprise second moving means 94 suited to preferably allow the rotation of the operating head 82 around a rotation axis Z. The rotation of the operating head 82 allows the latter, in particular the diamond wheels 86a, 86b and 86c, to be placed in at least one first position towards the first portion 42 of the workbench 4 (see Figure 6B) and in at least one second position towards the second portion 52 of the workbench 4 (see Figure 7B).

The second-moving means 94 preferably comprise a motor 95a which is visible in Figure 8B.

In variant embodiments, the second vertical moving means may comprise alternative means instead of the system illustrated herein, said alternative means being in any case suited to obtain the desired movement. Only by way of example, there may be electric and/or pneumatic motors and/or combinations of these and/or suitable kinematic mechanisms, such as racks, chains, belts, etc.

In a further variant embodiment, in order to move the operating head 82, and in particular the diamond wheels 86a, 86b and 86c, alternative moving means may be provided between the first position towards the first portion 42 of the workbench 4 (Figure 6B) and the second position towards the second portion 52 of the workbench 4 (Figure 7B). For example, instead of rotating the operating head 82 around the rotation axis Z, it will be possible to maintain a fixed relative position between the telescopic rod 93b and the diamond wheels 86a, 86b and 86c and to rotate the pneumatic cylinder 93a, through suitable rotation means, around the vertical axis Y by 180° between the first and the second position.

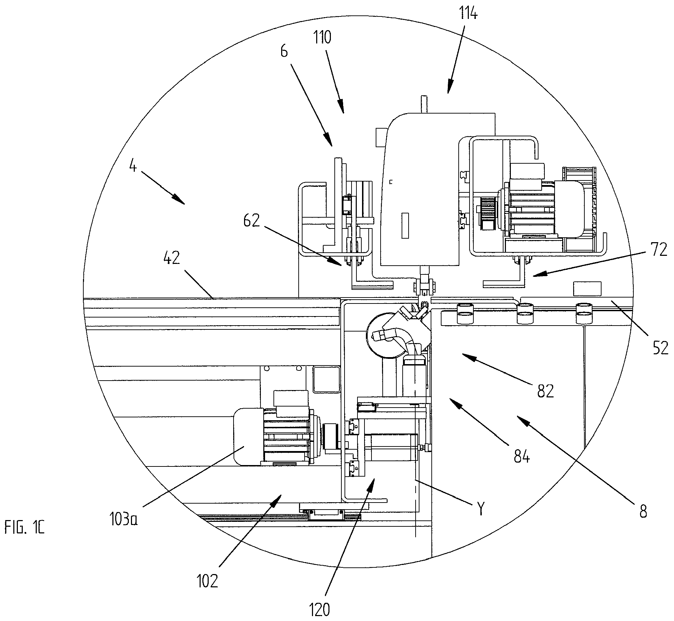

The moving means 84 preferably comprise third moving means 102, visible for example in Figures 1B and 1C, suited to allow the operating head 82 to be moved along a direction W.

The third moving means 102 preferably allow the operating head 82 to be moved along a direction corresponding, for example, to the edge B1 of the piece P1 to be processed.

The third moving means 102 preferably comprise a motor 103a.

In variant embodiments, the third vertical moving means may comprise alternative means instead of the system illustrated herein, said alternative means being in any case suited to obtain the desired movement. Only by way of example, there may be electric and/or pneumatic motors and/or combinations of these and/or suitable kinematic mechanisms, such as racks, chains, belts, etc. The moving means 84 preferably comprise fourth moving means 120 suited to allow the operating head 82 to be moved along a direction K, preferably parallel to the longitudinal direction X, under the workbench 4.

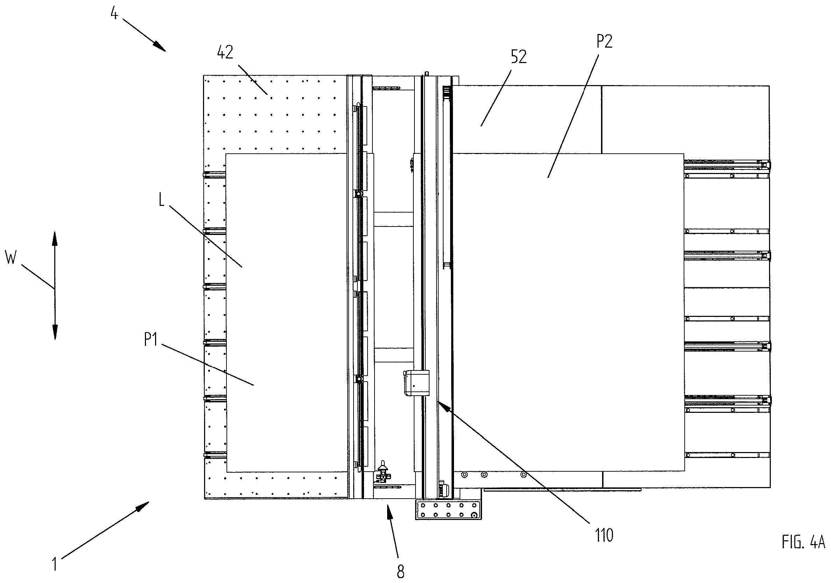

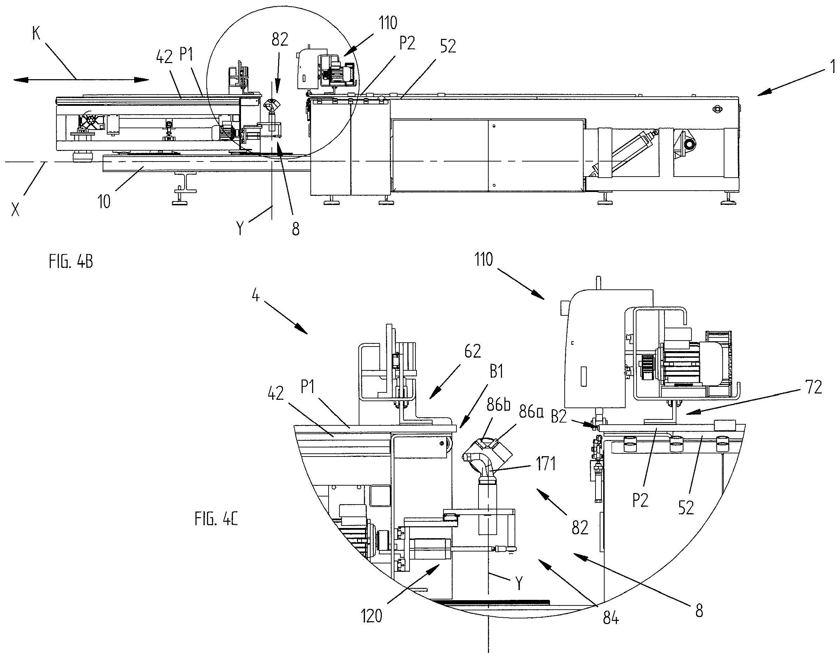

The fourth moving means 120 allow the operating head 82 to be arranged in at least one first position suited to allow the processing cycles to be performed, for example one of the positions illustrated in Figures 4B, 5B, 6B and 7B, and in at least one second rest position, in which it does not occupy space, under the workbench 4, for example towards the left with reference to Figures 2B and 3B. The fourth moving means 120 preferably comprise a pneumatic cylinder 121a provided with a rod 121b operatively connected to the pneumatic cylinder 93a used for the vertical movement. Slide means 121c favour the sliding movement of the operating head 82, preferably means in the form of rails.

In variant embodiments, the fourth vertical moving means may comprise alternative means instead of the system illustrated herein, said alternative means being in any case suited to obtain the desired movement. Only by way of example, there may be electric motors and/or suitable kinematic mechanisms, such as racks, chains, belts, etc.

In a variant embodiment, the fourth moving means may not be present and the operating head 82 may be maintained in a fixed position with respect to the longitudinal direction X, as shown in the figures illustrating this embodiment. The cutting means 6, as previously explained, are preferably positioned over the workbench 4.

In variant embodiments, the cutting means may be preferably positioned under the workbench.

The cutting means 6 preferably comprise a cutting head 110 provided with a cutting tool, typically a diamond point or a small wheel.

Moving means 114 allow the cutting head 110 to be moved with respect to the sheet L, according to predefined outlines corresponding to the cut piece/pieces to be obtained, which here below are referred to as shaped pieces P1 and P2.

The moving means 114 are conveniently controlled by a centre unit, not illustrated herein, which coordinates their movements over the sheet L.

In the embodiment illustrated herein, the cutting means 6 are preferably associated with the right portion 52 of the workbench 4 and are an integral part of the equipment 1.

In variant embodiments, however, the equipment may not comprise the cutting means and therefore comprise the workbench and the edging device, while the cutting means may constitute a separate part which works on the same workbench as the equipment according to the invention.

Furthermore, the equipment 1 preferably comprises suction means 150, visible in Figure 8B, suited to draw the material resulting from the processing cycle, for example glass powder. Said suction means 150 may preferably be operated as described above, in case of dry processing, in particular when the operating head is equipped with flap discs.

The suction means 150 preferably comprise a suction mouth 151 arranged in proximity to the diamond wheels 86a, 86b and 86c and connected to a suction pump and a collection container (not shown in the figures).

The equipment 1, furthermore, preferably comprises drying/blowing means advantageously used in the case of use of lubricating/cooling products for the glass processing steps, in particular, as explained above, when rotary diamond wheels are employed.

In the embodiment illustrated herein, the drying/blowing means preferably coincide with the suction means 150, wherein the function of the suction mouth 151 is switched so as to obtain a drying/blowing mouth, for example through the emission of an air flow.

In variant embodiments, the drying/blowing means can be made so that they are distinct from the suction means.

The operating head 82 is preferably associated with a lubricating unit 170 comprising a dispensing nozzle 171 suited to dispense a lubricating and/or cooling product which favours the operation of the diamond wheels 86a, 86b and 86c on the edge of the sheet, as described above. Usable lubricating and/or cooling products comprise, for example, emulsifiable oils, water, etc..

A preferred type of use of the equipment 1 that is the subject of the invention is described here below with reference to Figures from 2 to 7.

Figures 2A and 2B are related to the equipment 1 in the operating condition of beginning of the processing cycle.

The initial sheet L to be processed, in fact, is positioned on the workbench 4. The sheet L is advantageously kept in a fixed position on the workbench 4 through the action of the thrusting elements 62, 72.

The sheet L is preferably constituted by a glass sheet. The glass sheet L may be constituted by monolithic or layered glass, meaning glass made up of several layers of glass and/or other materials.

The glass sheet L is subjected to a first cutting operation by moving the cutting head 110.

In the example of embodiment illustrated herein, the glass sheet L is preferably cut along a single rectilinear direction which, among other things, corresponds to the direction of movement W of the operating head 82 of the edging device 8.

It is clear, however, that the cutting operation may follow different outlines according to the needs.

It should be noted that, in this case, also the third moving means 102 of the operating head 82 will be made in such a way as to allow the operating head 82 itself to be moved in different directions, for example the directions of a plane, and not along one direction W only, as in the case illustrated and described herein.

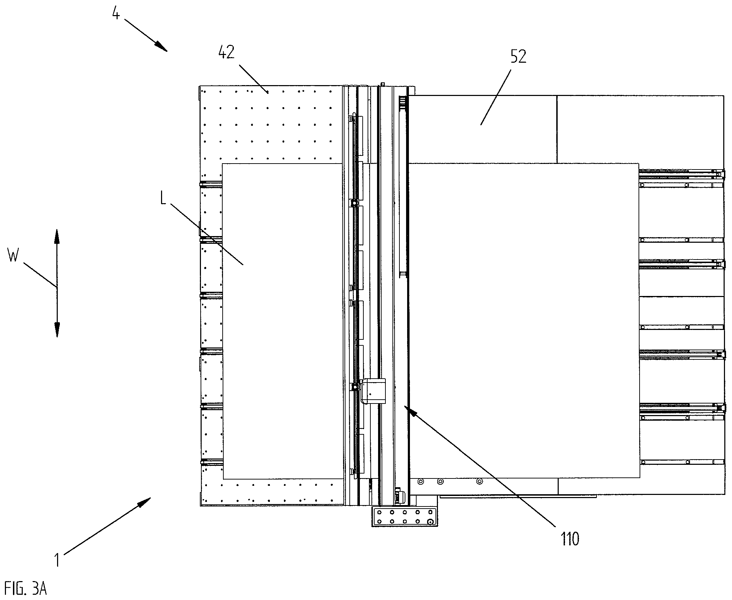

Figures 3A, 3B and 3C substantially show the situation after the cutting operation, when two shaped pieces P1 and P2 have been obtained from the sheet L.

After the cutting operation, in order to obtain the two shaped pieces P1 and P2, intermediate separating operations may be included in the process, possibly carried out through convenient movements of the portions 42, 52 of the workbench 4.

The two shaped pieces P1 and P2 are respectively provided with an edge B1, B2 which, as is known, has sharp edges that are dangerous to handle.

Furthermore, it should be noted that said sharp edges are the result of the preceding cutting operation, independently of the type of glass used, for example monolithic or layered, and independently of the cutting technology adopted. Successively, the first portion 42 of the workbench 4 which supports the first shaped piece P1 is moved along the direction X away from the second portion 52 of the workbench 4, meaning towards the left with reference to Figures 3B and 4B and 4C.

At this point, as shown in Figure 4C, between the two portions 42, 52 of the workbench 4 there is sufficient space for the upward movement of the operating head 82 of the edging device 8.

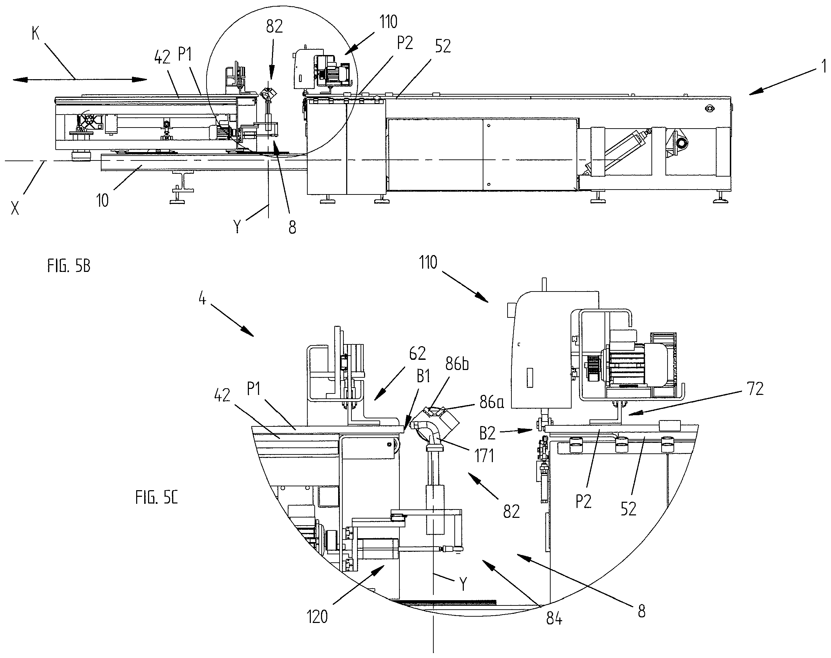

The operating head 82 is thus moved upwards and brought to the upper vertical position, as shown in Figure 5C.

The operating head 82 is then rotated by 90°, anticlockwise with reference to the figures, so as to bring the diamond wheels 86a, 86b and 86c at the level of the edge B1 of the piece P1 to be cut, as shown in Figure 6C.

The operating head 82 is moved along the direction W in order to process the entire edge B1.

The operating head 82 is then rotated by 180°, clockwise with reference to the figures, so as to bring the diamond wheels 86a, 86b and 86c at the level of the edge B2 of the piece P2 to be cut, as shown in Figure 7C.

The operating head 82 is moved along the direction W in order to process the entire edge B2.

The edging operations on the two edges B1 and B2 of the two pieces P1 and P2 are thus completed.

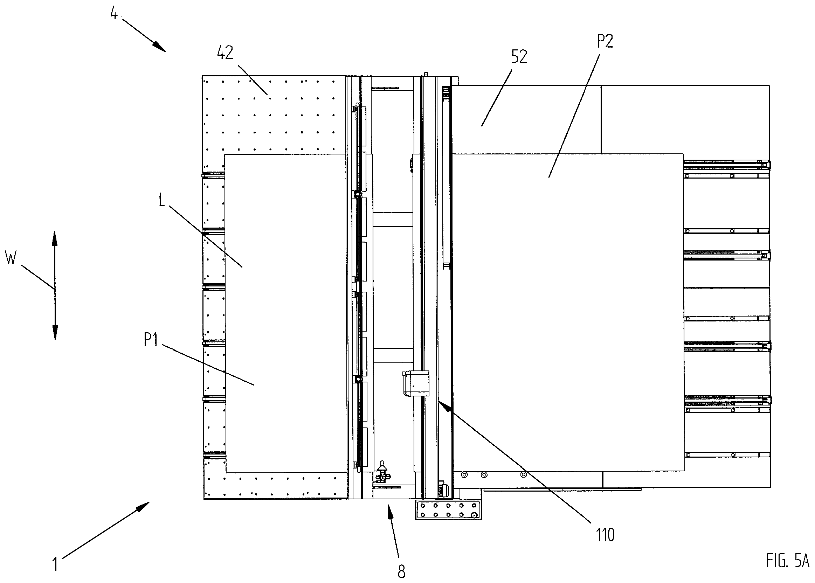

If any other edge of the pieces P1 and P2 needs edging, it will be sufficient to move the piece P1 or P2 on the respective portion 42, 52 of the workbench 4, in a manual or automated manner, in order to move the edge to be processed to a position substantially corresponding to that shown in Figures 5A, 5B and 5C.

During the movement of the piece P1 or P2 on the corresponding portion 42, 52 of the workbench 4, the operating head 82 is preferably arranged in a safe position and/or outside of the operating range of the device with the piece PI, P2 moving. The operating head 82 is preferably brought to the lower vertical position, for example as shown in Figure 3C.

It should be noted that in this embodiment it is the operating head 82 which is moved along the edge B1, along the direction W, to carry out the edging operation.

Preferably, during said edging steps the suction means 150 are activated to draw the material resulting from the processing cycle, for example glass powder in the case of dry processing.

Furthermore, preferably, the lubricating unit 170 is activated in order to favour the cutting operation by dispensing a suitable lubricating and/or cooling product, in the case of wet processing.

Again, preferably, during and/or after the activation of the lubricating unit 170 the drying/blowing means 150 are preferably activated to dry the cut areas. Advantageously, according to the description provided above, the equipment that is the subject of the invention makes it possible to carry out the edging operations on the sharp edges of pieces resulting from a cutting operation, with no need for the operator to intervene as it happens, instead, in the systems of the known type. The risks for the operator are therefore reduced.

The cut pieces do not need to be moved from a machine to another as it happens in the known art, with a consequent reduction of the idle times required by these operations.

In this way processing times and/or costs are reduced compared to the known art. Furthermore, the equipment according to the invention is capable of performing the cutting and edging operations within an operating area with reduced dimensions, substantially coinciding with the dimensions of a cutting machine of the known type.

It has thus been shown that the present invention makes it possible to achieve the set objects. In particular, it makes it possible to provide a piece of equipment for processing sheets which allows the risks for the operator to be reduced to a minimum and optimizes the efficiency of the cutting and edging operations thanks to its reduced overall dimensions compared to the systems of the known type.

It should be noted that while in the preferred embodiment of the present invention the edging device is positioned under the workbench, in variant embodiments the edging device may be placed in a different position with respect to the workbench, for example laterally or even above, without deviating in this way from the innovative concept introduced by the present invention.

It should be noted that while the present invention has been described with reference to the particular embodiment represented in the figures, the present invention is not limited to the particular embodiment illustrated and described herein; on the contrary, further variants of the embodiment described herein fall within the scope of the present invention, which is defined in the following claims.

## Claims

1. Equipment (1) for processing a glass sheet (L), comprising
an edging device (8) and
a workbench (4) suited to mutually move with respect to each other in order to allow an edging operation to be carried out by said edging device (8) with respect to at least one edge (B1, B2) of a piece resulting from a cutting step during which said glass sheet (L) has been cut,
said workbench (4) being suited to define the workbench (4) for said cutting step,
said workbench (4) comprising a first portion (42) and a second portion (52), at least one of said portions being movable with respect to the other, said two portions (42, 52) being suited to be moved away from or towards each other,
**characterized in that**
said edging device (8) is configured to be positioned in an intermediate area between said two portions (42, 52) of said workbench (4), when said two portions (42, 52) are moved away from each other,.

2. Equipment (1) according to any of the preceding claims, **characterized in that** said edging device (8) can be positioned in an area at a lower level than said workbench (4).

3. Equipment (1) according to any of the preceding claims, **characterized in that** it comprises moving means (84) suited to move said edging device (8).

4. Equipment (1) according to claim 2, **characterized in that** said moving means (84) comprise moving means (92, 94) suited to position said edging device (8) towards said first portion (42) or towards said second portion (52) of said workbench (4).

5. Equipment (1) according to any of the preceding claims, **characterized in that** it comprises moving means (46) suited to move said first portion and/or said second portion of said workbench (4).

6. Equipment (1) according to any of the preceding claims, **characterized in that** it comprises cutting means (6) associated with said workbench (4).

7. Equipment (1) according to claim 6, **characterized in that** said cutting means (6) are arranged over said workbench (4) and/or under said workbench (4).

8. Equipment (1) according to any of the preceding claims, **characterized in that** it comprises suction means (150) suited to draw the material resulting from said edging operation.

9. Equipment (1) according to any of the preceding claims, **characterized in that** it comprises drying/blowing means intended to carry out drying operations during said edging operation.

10. Equipment (1) according to any of the preceding claims, **characterized in that** it comprises lubricating and/or cooling means (170) for said edging operation.

## Patentansprüche

1. Ausrüstung (1) für die Bearbeitung einer Glasscheibe (L), eine Abkantvorrichtung (8) und einen Arbeitstisch (4) umfassend, dazu geeignet, sich wechselseitig bezüglich einander zu bewegen, um einen durch die besagte Abkantvorrichtung (8) auszuführenden Abkantvorgang an wenigstens einer Kante (B1, B2) eines aus einem Schneideschritt, während dessen die besagte Glasscheibe (L) geschnitten wurde, resultierenden Werkstücks zu erlauben,
wobei der besagte Arbeitstisch (4) geeignet ist, den Arbeitstisch (4) für den besagten Schneideschritt zu definieren,
wobei der besagte Arbeitstisch (4) einen ersten Abschnitt (42) und einen zweiten Abschnitt (52) umfasst, wobei wenigstens einer der besagten Abschnitte bezüglich des anderen beweglich ist, und wobei die besagten zwei Abschnitte (42, 52) dazu geeignet sind, voneinander fort oder aufeinander zu bewegt zu werden,
**dadurch gekennzeichnet, dass**
die besagte Abkantvorrichtung (8) dazu konfiguriert ist, in einem Zwischenbereich zwischen den besagten zwei Abschnitten (42, 52) des besagten Arbeitstisches (4) positioniert zu werden, wenn die besagten zwei Abschnitte (42, 52) voneinander fort bewegt werden.

2. Ausrüstung (1) nach einem jeden der vorstehenden Patentansprüche, **dadurch gekennzeichnet, dass** die besagte Abkantvorrichtung (8) in einem auf einer niedrigeren Ebene als dem besagten Arbeitstisch (4) befindlichen Bereich positioniert werden kann.

3. Ausrüstung (1) nach einem jeden der vorstehenden Patentansprüche, **dadurch gekennzeichnet, dass** sie Bewegungsmittel (84) umfasst, die geeignet sind, die besagte Abkantvorrichtung (8) zu bewegen.

4. Ausrüstung (1) nach Patentanspruch 2, **dadurch gekennzeichnet, dass** die besagten Bewegungsmittel (84) Bewegungsmittel (92, 94) umfassen, die dazu geeignet sind, die besagte Abkantvorrichtung (8) zu dem besagten ersten Abschnitt (42) oder zu dem besagten zweiten Abschnitt (52) des besagten Arbeitstisches (4) hin zu positionieren.

5. Ausrüstung (1) nach einem jeden der vorstehenden Patentansprüche, **dadurch gekennzeichnet, dass** sie Bewegungsmittel (46) umfasst, die geeignet sind, den besagten ersten und/oder den besagten zweiten Abschnitt des besagten Arbeitstisches (4) zu bewegen.

6. Ausrüstung (1) nach einem jeden der vorstehenden Patentansprüche, **dadurch gekennzeichnet, dass** sie Schneidemittel (6) umfasst, die mit dem besagten Arbeitstisch (4) verbunden sind.

7. Ausrüstung (1) nach Patentanspruch 6, **dadurch gekennzeichnet, dass** die besagten Schneidemittel (6) über dem besagten Arbeitstisch (4) und/oder unter dem besagten Arbeitstisch (4) angeordnet sind.

8. Ausrüstung (1) nach einem jeden der vorstehenden Patentansprüche, **dadurch gekennzeichnet, dass** sie Ansaugmittel (150) umfasst, die geeignet sind, das aus dem besagten Abkantvorgang resultierende Material abzuziehen.

9. Ausrüstung (1) nach einem jeden der vorstehenden Patentansprüche, **dadurch gekennzeichnet, dass** sie Trocknungs-/Gebläsemittel umfasst, die dazu dienen, während des besagten Abkantvorgangs Trocknungsvorgänge durchzuführen.

10. Ausrüstung (1) nach einem jeden der vorstehenden Patentansprüche, **dadurch gekennzeichnet, dass** sie Schmier- und/oder Kühlmittel (170) für den besagten Abkantvorgang umfasst.

## Revendications

1. Équipement (1) pour le traitement d'une feuille de verre (L) comprenant un dispositif de dégauchissage de bords (8) et un plan de travail (4) indiqué pour déplacer réciproquement par rapport l'un à l'autre de manière à consentir une opération de dégauchissage de bords qui doit être exécutée par ledit dispositif de dégauchissage de bords (8) par rapport à au moins un bord (B1, B2) d'une pièce dérivant d'une phase de coupe durant laquelle ladite feuille de verre (L) a été coupée,
ledit plan de travail (4) étant indiqué pour définir le plan de travail (4) pour ladite phase de coupe,
ledit plan de travail (4) comprenant une première portion (42) et une deuxième portion (52), au moins une desdites portions étant déplaçable entre elles, lesdites deux portions (42, 52) étant indiquées pour être éloignées ou rapprochées l'une de l'autre,
**caractérisé en ce que**
ledit dispositif de dégauchissage de bords (8) est configuré pour être positionné dans une zone intermédiaire entre lesdites deux portions (42, 52) dudit ledit plan de travail (4), quand lesdites deux portions (42, 52) sont éloignées l'une de l'autre.

2. Équipement (1) selon l'une quelconque des revendications précédentes, **caractérisé en ce que** ledit dispositif de dégauchissage de bords (8) peut être positionné dans une zone à un niveau inférieur par rapport audit ledit plan de travail (4).

3. Équipement (1) selon l'une quelconque des revendications précédentes, **caractérisé en ce qu'**il comprend des moyens de déplacement (84) indiqués pour déplacer ledit dispositif de dégauchissage de bords (8).

4. Équipement (1) selon la revendication (2), **caractérisé en ce que** lesdits moyens de déplacement (84) comprennent des moyens de déplacement (92, 94) indiqués pour positionner ledit dispositif de dégauchissage de bords (8) vers ladite première portion (42) ou vers ladite deuxième portion (52) dudit ledit plan de travail (4).

5. Équipement (1) selon l'une quelconque des revendications précédentes, **caractérisé en ce qu'**il comprend des moyens de déplacement (46) indiqués pour déplacer ladite première portion et/ou ladite deuxième portion dudit plan de travail (4).

6. Équipement (1) selon l'une quelconque des revendications précédentes, **caractérisé en ce qu'**il comprend des moyens de coupe (6) associés avec ledit plan de travail (4).

7. Équipement (1) selon la revendication 6, **caractérisé en ce que** lesdits moyens de coupe (6) sont disposés au-dessus dudit plan de travail (4) et/ou au-dessous dudit plan de travail (4).

8. Équipement (1) selon l'une quelconque des revendications précédentes, **caractérisé en ce qu'**il comprend des moyens d'aspiration (150) indiqués pour aspirer le matériel dérivant de ladite opération de dégauchissage de bords.

9. Équipement (1) selon l'une quelconque des revendications précédentes, **caractérisé en ce qu'**il comprend des moyens de séchage/soufflement destinés à exécuter des opérations de séchage durant ladite opération de dégauchissage de bords.

10. Équipement (1) selon l'une quelconque des revendications précédentes, **caractérisé en ce qu'**il comprend des moyens de lubrification et/ou de refroidissement (170) pour ladite opération de dégauchissage de bords.
